(19) Europäisches Patentamt / European Patent Office / Office européen des brevets

(11) **EP 2 568 397 A1**

(12) **EUROPEAN PATENT APPLICATION**
published in accordance with Art. 153(4) EPC

(43) Date of publication:
**13.03.2013 Bulletin 2013/11**

(21) Application number: **11832383.1**

(22) Date of filing: **15.09.2011**

(51) Int Cl.:
*G06F 17/30* (2006.01)      *H04N 5/76* (2006.01)
*H04N 7/173* (2011.01)

(86) International application number:
**PCT/JP2011/071091**

(87) International publication number:
**WO 2012/049945 (19.04.2012 Gazette 2012/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.10.2010   JP 2010232008**

(71) Applicant: **JVC KENWOOD Corporation
Kanagawa 221-0022 (JP)**

(72) Inventor: **FUJII Takeya
Yokohama-shi
Kanagawa 221-0022 (JP)**

(74) Representative: **Wagner, Karl H.
Wagner & Geyer
Gewürzmühlstrasse 5
80538 Munich (DE)**

(54)      **PROGRAM RETRIEVAL DEVICE AND PROGRAM RETRIEVAL METHOD**

(57)      An object of the invention is to appropriately search for a program or a predetermined scene in the program, regardless of whether there is caption data.

A program search device (420) includes a table update unit (180) that extracts caption data or program information included in a program stream, divides the caption data or program information into morphemes, and registers the morphemes in an allowed word table, a program storage unit (464), a data acquiring unit (482) that acquires text data related to a program and associates the text data with acquisition date and time information, a data processing unit (184) that divides the text data into morphemes and replaces the divided morpheme with a predetermined symbol when the divided morpheme has not been registered in the allowed word table, an index giving unit (492) that gives a set of the replaced text data and the acquire date and time information as index data to a stored program stream, and a program extracting unit (494) that extracts a program or a predetermined scene in the program on the basis of a keyword or the index data (FIG. 11).

FIG.11

**Description**

Field

The present invention relates to a program search device and a program search method which process text data into index data according to an arbitrary sequence and use the index data for search.

Background

In television broadcasting, a technique has been used which stores programs broadcasted every day in an apparatus and enables the user to view the stored programs at any time. When caption data is added to a program (character multiplex broadcast) and is associated as index data with the program or a predetermined scene in the program, a program search device can perform a keyword search on the index data to rapidly extract the program or a predetermined scene in the program which is desired by the user from the stored programs.

In addition, a technique has been known which stores an arbitrary character string and a sentence for explaining the character string in a database so as to be associated with each other on the basis of, for example, dictionary data, divides caption data of a program into morphemes when the caption data of the program is acquired, compares the morphemes with the character strings stored in the database, and displays only the morphemes matched with the stored character strings so as to be highlighted (for example, Patent Literature 1). The user can refer to the sentence which explains the highlighted morphemes stored in the database only by selecting the highlighted morphemes.

Citation List

Patent Literature

Patent Literature 1: Japanese Patent No. 3538955

Summary

Technical Problem

In recent years, terrestrial analog broadcasting has been changed to terrestrial digital broadcasting. Therefore, in the terrestrial digital broadcasting, in many cases, programs and caption data or program information are multiplexed and broadcasted as program streams. The technique which uses the caption data or program information as index data for search is expected to be used more effectively.

However, in the terrestrial digital broadcasting, the caption data is not necessarily added to the program. For example, the caption data is not included in a broadcast program whose content cannot be presented in advance, such as news or live broadcasting. Even when the caption data is included in the broadcast program, limited information, such as a title, is included in the broadcast program.

Therefore, a plurality of programs stored in the apparatus include programs including caption data (to which caption data is added) and programs without including caption data (to which no caption data is added). In other words, programs to which index data is given and programs to which no index data is given are mixed. Therefore, since the latter program (program to which no caption data is added) is excluded even from a search target, it is less likely to be extracted as a viewing target. As a result, even when the stored program or a predetermined scene in the program is searched, in some cases, it is difficult to appropriately extract a desired program or a predetermined scene in the program.

The present invention has been made in view of the above-mentioned problems and an object of the invention is to provide a program search device and a program search method capable of appropriately searching for a program or a predetermined scene in the program, regardless of whether there is caption data.

Solution to Problem

In order to achieve the object, the present invention provides the following program search device and program search method.

(1) A program search device that includes: a table storage unit that stores an allowed word table in which a plurality of morphemes and the number of appearances thereof are associated with each other; a program stream acquiring unit that acquires a program stream generated according to a broadcasting code of ethics; a table update unit that extracts caption data or program information, which is a first text data item related to the content of a program, from the program stream when the acquired program stream includes the caption data or the program information, divides the extracted caption data or program information into morphemes, registers the divided morphemes in the allowed word table when the divided morphemes are not in the allowed word table, and updates the number of appearances corresponding to the divided morphemes when the divided morphemes are in the allowed word table; a program storage unit that stores a program included in the acquired program stream; a data acquiring unit that acquires a second text data item related to the stored program and associates the acquired second text data item with acquisition date and time information; a data processing unit that divides the second text data item into morphemes, replaces the divided morpheme with a predetermined symbol when the divided morpheme has not been registered in the allowed word table, or when the divided morpheme has been registered in the allowed word table, but the number of appearances corresponding to the morpheme is less than a predetermined first threshold value, and recombines the morphemes into a third text data item; an index giving unit that gives a set of the recombined third text data item and the acquisition date and time information associated with the second text data item corresponding to the third text data item as index data to the stored program; and a program extracting unit that extracts the program stored in the program storage unit or a predetermined scene in the program on the basis of an input search keyword and the index data.

(2) A program search device that includes: a table storage unit that stores an allowed word table in which a plurality of morphemes and the number of appearances thereof are associated with each other; a program information acquiring unit that acquires program information which is a first text data item related to the content of a program and is generated according to a broadcasting code of ethics; a table update unit that divides the program information into morphemes, registers the divided morphemes in the allowed word table when the divided morphemes are not in the allowed word table, and updates the number of appearances corresponding to the divided morphemes when the divided morphemes are in the allowed word table; a program storage unit that stores a program included in the acquired program stream; a data acquiring unit that acquires a second text data item related to the stored program and associates the acquired second text data item with acquisition date and time information; a data processing unit that divides the second text data item into morphemes, replaces the divided morpheme with a predetermined symbol when the divided morpheme has not been registered in the allowed word table, or when the divided morpheme has been registered in the allowed word table, but the number of appearances corresponding to the morpheme is less than a predetermined first threshold value, and recombines the morphemes into a third text data item; an index giving unit that gives a set of the recombined third text data item and the acquisition date and time information associated with the second text data item corresponding to the third text data item as index data to the stored program; and a program extracting unit that extracts the program stored in the program storage unit or a predetermined scene in the program on the basis of an input search keyword and the index data.

(3) The program search device according to the above described (1) or (2), and when caption data is added to the stored program, the index giving unit gives the caption data as the index data to the program, and when no caption data is added to the program or when it is considered that no caption data is added to the program, the index giving unit gives the recombined third text data item as the index data to the program.

(4) The program search device according to the above described (3), when a caption ratio, which is the number of caption data items per second, is less than a predetermined second threshold value, the index giving unit considers that no caption data is added to the program.

(5) A program search method that includes: acquiring a program stream generated according to a broadcasting code of ethics; extracting caption data or program information, which is a first text data item related to the content of a program, from the acquired program stream when the program stream includes the caption data or the program information; dividing the extracted caption data or program information into morphemes; registering the divided morphemes in an allowed word table in which a plurality of morphemes and the number of appearances thereof are associated with each other when the divided morphemes are not in the allowed word table; updating the number of appearances corresponding to the divided morphemes when the divided morphemes are in the allowed word table; storing a program included in the acquired program stream in a program storage unit; acquiring a second text data item related to the stored program and associating the acquired second text data item with acquisition date and time information; dividing the second text data item into morphemes; replacing the divided morpheme with a predetermined symbol when the divided morpheme has not been registered in the allowed word table, or when the divided morpheme has been registered in the allowed word table, but the number of appearances corresponding to the morpheme is less than a predetermined first threshold value; recombining the second text data item into a third text data item; giving a set of the recombined third text data item and the acquisition date and time information associated with the second text data item corresponding to the third text data item as index data to the stored program; and extracting the program stored in the program storage unit or a predetermined scene in the program on the basis of an input search keyword and the index data.

(6) A program search method that includes: acquiring program information which is a first text data item related to the content of a program and is generated according to a broadcasting code of ethics; dividing the program information into morphemes; registering the divided morphemes in an allowed word table in which a plurality of morphemes and the number of appearances thereof are associated with each other when the divided morphemes are not in the allowed word table; updating the number of appearances corresponding to the divided morphemes when the divided morphemes are in the allowed word table; storing a program included in the acquired program stream in a program storage unit; acquiring a second text data item related to the stored program and associating the acquired second text data item with acquisition date and time information; dividing the second text data item into morphemes; replacing the divided morpheme with a predetermined symbol when the divided morpheme has not been registered in the allowed word table, or when the divided morpheme has been registered in the allowed word table, but the number of appearances corresponding to the morpheme is less than a predetermined first threshold value; recombining the second text data item into a third text data item; giving a set of the recombined third text data item and the acquisition date and time information associated with the second text data item corresponding to the third text data item as index data to the stored program; and extracting the program stored in the program storage unit or a predetermined scene in the program on the basis of an input search keyword and the index data.

Advantageous Effects of Invention

According to the present invention, it is possible to appropriately search for a program or a predetermined scene in the program, regardless of whether there is caption data.

Brief Description of Drawings

FIG. 1 is a diagram illustrating the schematic connection relation of a program providing system according to a first embodiment.
FIG. 2 is a functional block diagram illustrating the schematic structure of a filtering device.
FIG. 3 is a diagram illustrating an allowed word table.
FIG. 4 is a diagram illustrating an example of the rendering of post data.
FIG. 5 is a flowchart illustrating the process flow of a filtering method.
FIG. 6 is a diagram illustrating the process of a table update unit.
FIG. 7 is a flowchart illustrating the process flow of a filtering method.
FIG. 8 is a diagram illustrating an example of a post data group.
FIG. 9 is a diagram illustrating the process of a data processing unit.
FIG. 10 is a diagram illustrating the schematic connection relation of a program providing system according to a second embodiment.
FIG. 11 is a functional block diagram illustrating the schematic structure of a program search device.
FIG. 12 is a flowchart illustrating the process flow of a program search method.
FIG. 13 is a diagram illustrating an example of caption data in program additional data.
FIG. 14 is a flowchart illustrating the process flow of the program search method.
FIG. 15 is a diagram illustrating an example of the display of a search list.
FIG. 16 is a diagram illustrating an example of the display of an image on a display device.

Description of Embodiments

Hereinafter, preferred embodiments of the present invention will be described in detail with reference to the accompanying drawings. In the embodiments, dimensions, materials, and other detailed numerical values are given as examples for ease of understanding of the invention, but do not limit the invention except as particularly specified. In the specification and the drawings, components having substantially the same functions and structures are denoted by the same reference numerals and the description thereof will not be repeated. In addition, components that are not directly related to the present invention are not illustrated.
As a first embodiment, a filtering device and a filtering method that appropriately filter arbitrary text data will be described. As a second embodiment, a program search device and a program search method will be described which appropriately search for a program and a predetermined scene in the program using a filtering technique according to the first embodiment. At least the filtering technique is common to the first and second embodiments.
In many cases, the filtering technique generally uses a forbidden word table including words (forbidden words) which may not be used for services and are offensive to public order and morals. Therefore, the service provider performs, for example, a filtering process of excluding words corresponding to the forbidden words on post data which is posted to an electronic bulletin board, with reference to the forbidden word table. However, in the filtering process of excluding the forbidden words, it is possible to easily prevent the forbidden words from being filtered by changing the forbidden words to other Chinese characters (phonetic equivalents), or inserting a blank or a symbol between the characters to "modify" the word such that the word does not coincide to the forbidden word.

The reason is that, even when the word corresponding to the forbidden word is changed to phonetic equivalents or symbols are added to the word, the meaning of the word can be transmitted to other persons. In this case, there are innumerable different display aspects of each word to be forbidden. Therefore, even if the service provider can specify and exclude the forbidden words, they cannot exclude all of the innumerable display aspects of the forbidden words.

In order to exclude all of the innumerable display aspects of the forbidden words, a method may be used which leaves only the words or sentences which are not offensive to public order and morals, using an allowed word table including allowable words (allowed words), not the forbidden word table including forbidden words. However, new words for persons or structures appear every day. Therefore, in order to prevent the allowed words from being excluded by filtering, the frequency of update of the allowed word table needs to be improved.

However, at present, no service provider uses the allowed word table and a system which delivers the allowed word table to the information terminal of each user has not been constructed. In the first place, in the creation of the word table, the number of necessary words in the allowed word table is significantly greater than that in the forbidden word table. For example, while the number of forbidden words generated for a month is about 4000, the number of allowed words generated for a month is about 4,000,000. It is very costly to deliver or update the word table. Therefore, it is not practical to use the allowed word table.

In the first embodiment, a filtering device and a filtering method will be described which automatically form an allowed word table for filtering using, for example, a television broadcast program providing system.

(First embodiment: program providing system 100)

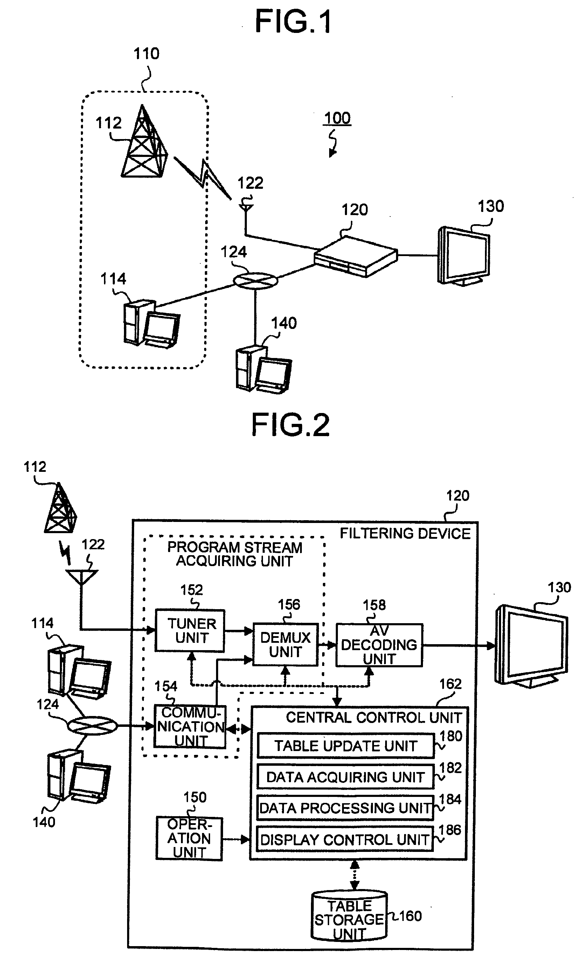

FIG. 1 is a diagram illustrating the schematic connection relation of a program providing system 100 according to the first embodiment. The program providing system 100 includes a program providing device 110, a filtering device 120, a display device 130, and a service providing server 140.

The program providing device 110 includes a broadcasting station 112 and a program providing server 114 and delivers a program stream. The program stream includes a program and various kinds of information about the program as additional data.

The filtering device 120 receives program streams of various programs, such as a terrestrial digital broadcast program, a BS/CS digital broadcast program, a cable television broadcast program, an IP broadcast program, and a video on demand, from the broadcasting station 112 serving as the program providing device 110 through an antenna 122 and from the program providing server 114 serving as the program providing device 110 through a communication network 124, such as the Internet. Then, the filtering device 120 generates an allowed word table for filtering, using caption data included in the program stream or program information, which is a first text data item for the content of the program. In addition, the filtering device 120 filters arbitrary text data using the generated allowed word table.

The display device 130 includes, for example, a liquid crystal display, an organic EL (Electro Luminescence) display, a cinema screen, or a projector and displays the program received by the filtering device 120 or the filtered text data.

The service providing server 140 is operated by the service provider and provides various services, such as an electronic bulletin board to which the third party posts data, to the information terminal of the third party or the filtering device 120.

The filtering device 120 that constitutes the program providing system 100 according to the present embodiment aims for appropriately filtering text data. Next, first, each functional unit forming the filtering device 120 will be described; subsequently a filtering method using the filtering device 120 will be described in detail.

(Filtering device 120)

FIG. 2 is a functional block diagram illustrating the schematic structure of the filtering device 120. The filtering device 120 includes an operation unit 150, a tuner unit 152, a communication unit 154, a DEMUX (DEMUltipleXer) unit 156, an AV decoding unit 158, a table storage unit 160, and a central control unit 162. The tuner unit 152, the communication unit 154, and the DEMUX unit 156 function as a program stream acquiring unit that acquires program streams. In FIG. 2, the flow of data is represented by a solid arrow and the flow of a control signal is represented by a dashed arrow.

The operation unit 150 includes, an operation key, an arrow key, a joystick, a jog dial, a touch panel, and the like and receives an operation input from the user.

The tuner unit 152 receives a broadcast signal from the broadcasting station 112 via the antenna 122 and demodulates the broadcast signal according to the channel number set through the operation unit 150 to generate program streams.

The communication unit 154 establishes communication with the program providing server 114 through the communication network 124; acquires an IP streaming corresponding to the broadcast signal, which is delivered by the program providing server 114, in units of packets using an Internet protocol similar to an HTTP (HyperText Transfer Protocol), similarly to the tuner unit 152; and generates program streams by decompressing the IP streaming according to a time stamp. In addition, the communication unit 154 may establish communication with the service providing server 140.

The DEMUX unit 156 demultiplexes the program stream into a plurality of data items, such as video data (MPEG (Moving Picture Experts Group) video streams), audio data (MPEG audio streams), caption data, time data, and program information.

The AV decoding unit 158 acquires video data and audio data from the DEMUX unit 156; decodes the video signal and the audio signal; and outputs the decoded video signal to the display device 130. The audio signal is output to an audio output device (not illustrated), such as a speaker.

The table storage unit 160 includes a storage medium, such as flash memory or an HDD (Hard Disk Drive), and stores an allowed word table in which a plurality of morphemes are associated with the number of times the morphemes appear. To be exact, the HDD is an apparatus, but is treated as a synonym of a storage medium, for convenience of explanation.

The central control unit 162 manages and controls the overall operation of the filtering device 120 using; a semiconductor integrated circuit including, for example, a central processing unit (CPU); a ROM that stores programs or the like, and RAM serving as a work area. In the present embodiment, the central control unit 162 also functions as a table update unit 180, a data acquiring unit 182, a data processing unit 184, and a display control unit 186.

When caption data or program information, which is the first text data item, is included in the program stream acquired via the tuner unit 152 serving as a program stream acquiring unit or the communication unit 154; the table update unit 180 extracts one or both of the caption data and the program information from the program stream; and divides the information or/and the data into morphemes. When the divided morphemes are not included in the allowed word table, which will be described below, the table update unit 180 registers the morphemes. When the divided morphemes are included in the allowed word table, the table update unit 180 updates the number of appearances corresponding to the morphemes. The caption data here means text data used to display information about, for example, a title, casting, explanations, and conversation using characters in a video medium, such as a movie or a television. The program information includes various kinds of information about the content of a program, such as a channel number, a service ID, an event ID, a program start time, a program end time, a program name, program description information, information about performers and staffs in the program, information about a theme song, and the genre of the program. Hereinafter, for convenience of explanation, one or both of the caption data and the program information are referred to as program additional data. In some cases, the program additional data is one of the caption data or the program information.

Specifically, the table update unit 180 judges whether the program additional data is included in the program stream acquired via the tuner unit 152 or the communication unit 154. When the program additional data is included, the table update unit 180 divides the program additional data into one or a plurality of morphemes using a morpheme dictionary. The morpheme dictionary, here, is obtained by collecting a large number of sentences in advance and arranging the juncture probability of each morpheme and another morpheme connected before and after the morpheme in a dictionary format. The table update unit 180 can divide a natural language, such as Japanese, without a delimiter, in units of morphemes using the morpheme dictionary. When the divided morpheme is not included in the morpheme dictionary, the table update unit 180 divides the language into morphemes using the delimiters of a character type, such as a Chinese character, alphanumeric, kana, or katakana. As a morpheme analysis engine for dividing the language into morphemes, a technique may be used which predicts the "segmentation" of a natural language using a statistical method and dividing the language in units of morphemes. An algorithm for dividing a language into morphemes using the morpheme dictionary is a known technique and thus the detailed description thereof is omitted.

Subsequently, the table update unit 180 registers each of the divided morphemes in the allowed word table or updates the number of appearances of the registered morphemes.

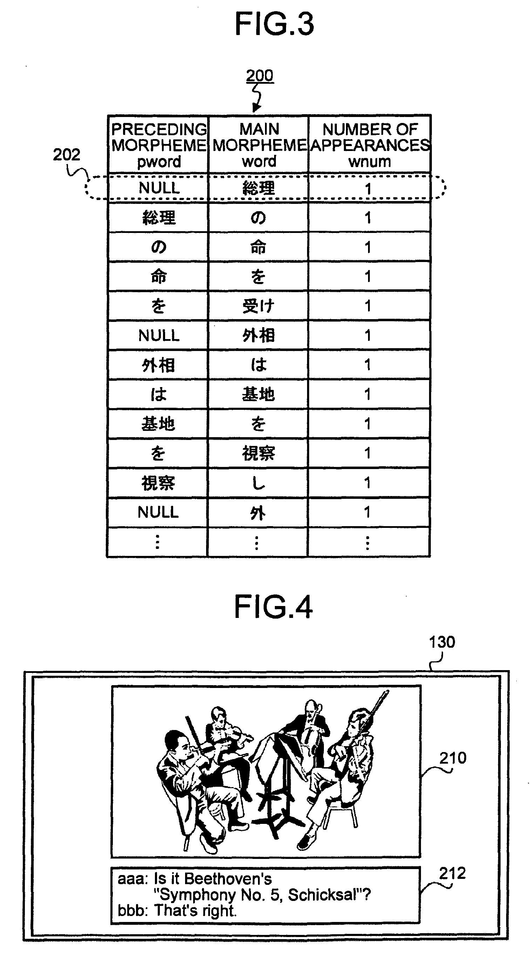

FIG. 3 is a diagram illustrating the allowed word table 200. The allowed word table 200 has a table structure in which a preceding link morpheme pword, a main morpheme "word", and the number of appearances wnum are uniquely associated with each other. The preceding link morpheme pword is a morpheme in front of the main morpheme "word" in a divided morpheme string. When the main morpheme "word" is at the head of a sentence, the preceding link morpheme pword is null (NULL). The main morpheme "word" is a main keyword, and null is not allowed to be given to the main morpheme "word". Therefore, in a Japanese sentence "総理の命を受け" the table update unit 180 generates a record 202 in which "総理" is the main morpheme "word" and the preceding link morpheme pword is "NULL", but does not generate a record in which "受け" is the preceding link morpheme pword and the main morpheme "word" is "NULL". The number of appearances wnum means the number of times a combination of the preceding link main morpheme pword and the main morpheme "word" appears in the program additional data and is an integer equal to or greater than 1.

When a combination of two successive morphemes among the divided morphemes is not included in the allowed word table 200, the table update unit 180 registers the combination of the two morphemes. When the combination of the two successive morphemes is included in the allowed word table 200, the table update unit 180 increments the number of appearances corresponding to the combination by 1 (+1). Therefore, in the allowed word table 200, a combination of the preceding link morpheme pword and the main morpheme "word" is unique. When a statement for generating the allowed word table 200 is represented by, for example, SQL (Structured Query Language), which is a database description language, as follows:

```
create table allowing_word_table (
    pword text,
    word text not null,
    wnum integer,
    UNIQUE (pword, word)
);
```

In the present embodiment, it is possible to obtain the following effect since the allowed word table 200 is generated using the program additional data included in the program stream. That is, a program and program additional data are generated according to the broadcasting code of ethics. The broadcasting code of ethics prescribes that "fair words and elegant expressions need to be used", for example, in a founding charter of broadcasting code of ethics. The program additional data which is generated according to the broadcasting code of ethics does not include a word or a sentence which is offensive to public order and morals. Therefore, when the allowed word table 200 is generated based on the program additional data included in the program stream, it is not necessary to determine whether each word corresponds to an allowed word and it is possible to easily accumulate the allowed word.

In addition, a function of receiving the program stream itself is established. Therefore, it is possible to frequently update the allowed word table 200 as needed by only extracting the program additional data included in the program stream in the filtering device 120, without constructing a new system for delivering the allowed word table 200 with a large amount of data to the information terminal of each user. Therefore, it is possible to construct a system capable of frequently updating the allowed word table 200 at a minimum maintenance cost.

Even when a system for delivering the allowed word table 200 with a large amount of data to the information terminal of each user is constructed, there is a risk of the third party falsifying the allowed word table 200 when the allowed word table 200 is delivered to the information terminal. In the present embodiment, since the allowed word table 200 is updated in a closed space of the filtering device 120, it is possible to minimize the risk of the falsification.

In the present embodiment, in order to achieve the above-mentioned object, the program additional data included in the program stream which is acquired through the tuner unit 152 is mainly adopted. However, the program additional data in the program stream acquired from the program providing server 114 which performs, for example, cable television broadcasting, IP broadcasting, and video on demand may be adopted as long as it complies with the broadcasting code of ethics.

In addition, there is a service provider who provides EPG (Electronic Program Guide) independently from the provision of the program stream. It is possible to directly acquire the above-described program information from the server (not illustrated) managed by the service provider. The program information can be adopted in the present embodiment as long as it complies with the broadcasting code of ethics. In this case, the communication unit 154 functions as a program information acquiring unit which acquires the program information, and the table update unit 180 divides the program information acquired by the communication unit 154 serving as the program information acquiring unit into morphemes and reflects the morphemes to the allowed word table 200. In the following description, for convenience of explanation, a configuration in which program additional data, that is, caption data or program information is extracted from the program stream and is then reflected to the allowed word table 200 is taken up. However, needless to say, the program information acquired through the communication unit 154 may also be used in the allowed word table 200 according to the present embodiment.

The data acquiring unit 182 acquires arbitrary text data (second text data item) from the service providing server 140 through the communication unit 154 and associates acquisition date and time information indicating the time when the arbitrary text data is generated, posted, or acquired with the arbitrary text data. For example, when there is a service providing server 140 which opens post data for the program broadcasted by an arbitrary broadcasting station 112 as an electronic bulletin board to the public, the data acquiring unit 182 acquires the post data from the electronic bulletin board and associates the date and time when the data is posted as the acquisition date and time information with the post data.

In such an electronic bulletin board (live electronic bulletin board) or a live blog (diary), an unspecified number of writers post data substantially in real time through the communication network 124, as if it were live broadcast, for a series of programs broadcasted by a specific broadcasting station 112. In the present embodiment, the data acquiring unit 182 acquires the post data from the electronic bulletin board which is provided only for the arbitrary broadcasting station 112.

The data acquiring unit 182 may specify the title of a thread related to the arbitrary broadcasting station 112 and acquire the post data thereof in a site only for posting. In addition, when the broadcasting station 112 manages an independent site for collecting opinions therefor, the data acquiring unit 182 may acquire the post data through the site.

The post data has high real-time capability. Therefore, for example, when the post data acquired by the data acquiring unit 182 is displayed on the display device 130 along with the program in the program stream acquired by the program stream acquiring unit, which is a posting target, the user can browse the program and opinions or explanations for the program substantially in real time.

In addition, post data may be acquired from the program in the program stream transmitted from the program information providing server 114 by the same method as described above. However, in this case, the program in the program stream transmitted by the program information providing server 114 is limited to a program which is resent substantially at the same time as the program transmitted from the broadcasting station 112 by terrestrial digital broadcasting, BS/CS digital broadcasting, or cable television broadcasting.

The data processing unit 184 filters the text data (second text data item) acquired by the data acquiring unit 182 to generate new text data (third text data item). For example, as described above, when the data acquiring unit 182 acquires post data from the service providing server 140, the data processing unit 184 filters the post data to generate new post data.

Specifically, first, the data processing unit 184 divides the text data (second text data item) acquired by the data acquiring unit 182 into morphemes using the above-mentioned morpheme dictionary. Then, the data processing unit 184 determines whether the divided morphemes (exactly, a combination of two morphemes) have been registered in the allowed word table 200. For the morphemes registered in the allowed word table 200, the data processing unit 184 determines whether the number of appearances thereof is equal to or greater than a predetermined first threshold value $\alpha$.

In this case, when the morphemes have not been registered in the allowed word table 200; or although the morphemes have been registered in the allowed word table 200, the number of appearances corresponding to the morphemes is less than the first threshold value $\alpha$; the data processing unit 184 replaces the morphemes with a predetermined symbol or a plurality of predetermined symbols and recombines the divided morphemes into text data (third text data item). Therefore, only the morphemes registered in the allowed word table 200 remain in the newly generated text data.

The display control unit 186 renders the text data processed by the data processing unit 184 into a text caption image and displays the rendering image on the display device 130.

FIG. 4 is a diagram illustrating an example of the rendering of post data. As described above, when the data acquiring unit 182 acquires post data (second text data item) from the service providing server 140, the post data (third text data item) filtered by the data processing unit 184 is displayed in a post data region 212 which is provided below a program display region 210 in the display device 130 such that the user can browse the post data and the program in parallel. In this case, since the browsed post data has been filtered by the data processing unit 184, it does not include a word or a sentence which is offensive to public order and morals. Therefore, minors can view the post data without any problem.

(Filtering method)

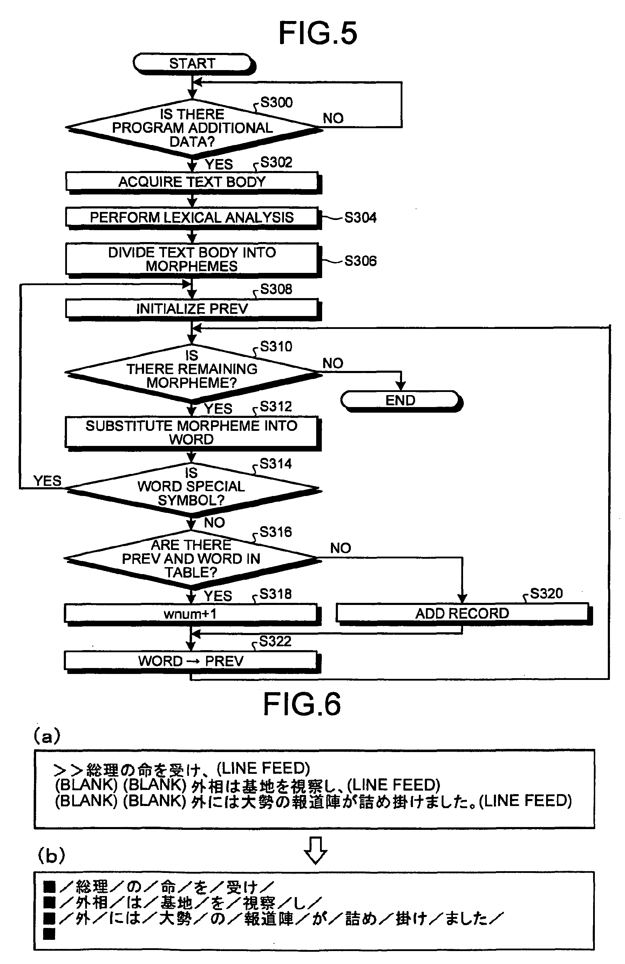

FIG. 5 is a flowchart illustrating the process flow of a filtering method. In particular, FIG. 5 illustrates a process of generating the allowed word table 200 in the filtering method.

When the DEMUX unit 156 detects program additional data in a program stream (YES in S300), the table update unit 180 acquires a text body of the program additional data from the DEMUX unit 156 (S302), performs lexical analysis on the text body, and replaces one or more punctuation marks, line feeds, symbols, and external characters (characters other than predetermined Chinese characters, alphanumeric, kana, and katakana) in the text body with a special symbol (for example, "■") (S304). In this case, for example, when the punctuation marks are successively written, a combination of all of the successive punctuation marks is replaced with one special symbol. As such, when the table update unit 180 performs a process of performing lexical analysis to replace, for example, the punctuation mark with a special symbol, symbols or blanks used in the layout peculiar to the program additional data make it possible to prevent morphemes from unnecessarily being registered in the allowed word table 200. Therefore, it is possible to accumulate only the morphemes required for a search.

Then, the table update unit 180 divides the text body, in which the punctuation mark and the like are replaced, into morphemes using the morpheme dictionary (S306). In this case, a morpheme engine serving as the table update unit 180 uses the replaced special symbol as a delimiter between the morphemes.

FIG. 6 is a diagram illustrating the process of the table update unit 180. Here, in the text body, a line feed character is represented by (line feed) and a blank character is represented by (blank). For example, when caption data in the program additional data included in the program stream is text data illustrated in FIG. 6(a), the table update unit 180 replaces a punctuation mark, such as "»", ",", ".", (line feed), or (blank), with the special symbol "■", decomposes the text data into morphemes, and forms a morpheme string illustrated in FIG. 6(b). For ease of understanding, a symbol "/" is inserted between the morphemes, but is not treated as the symbol that actually exists.

Subsequently, the table update unit 180 initializes (assigns null NULL) a preceding morpheme variable PREV (S308) and determines whether there remains a morpheme (morpheme string) which has not been subjected to the registration determining process using the allowed word table 200 (S310). When it is determined there remains no morpheme which has not been subjected to the registration determining process (NO in S310), the process of generating the allowed word table 200 ends. When there still remains a morpheme which has not been subjected to the registration determining process (YES in S310), the table update unit 180 extracts one morpheme at the head of the morpheme string which has not been subjected to the registration determining process using the allowed word table 200, assigns it into a morpheme variable WORD, and deletes a target morpheme from the morpheme string (S312).

Then, the table update unit 180 determines whether the morpheme variable WORD is the special symbol " ■" (S314). When the morpheme variable WORD is the special symbol (YES in S314), the process is repeated from the preceding link morpheme variable initializing step S308.

When the morpheme variable WORD is not the special symbol (NO in S314), the table update unit 180 determines whether a combination of the preceding morpheme variable PREV and the morpheme variable WORD exists as a combination of the preceding link morpheme pword and the main morpheme "word" in the allowed word table 200 (S316). When it is determined that there exists the combination of the preceding morpheme variable PREV and the morpheme variable WORD (YES in S316), the table update unit 180 increments the number of appearances wnum corresponding to the preceding link morpheme pword and the main morpheme "word" (S318). When it is determined that there is no combination of the preceding morpheme variable PREV and the morpheme variable WORD (NO in S316), the table update unit 180 adds the combination of the preceding morpheme variable PREV and the morpheme variable WORD as a new record of the preceding link morpheme pword and the main morpheme "word" to the allowed word table 200 and sets the corresponding number of appearances wnum to 1 (S320).

Then, the table update unit 180 assigns the value of the morpheme variable WORD to the preceding morpheme variable PREV (S322), and repeats the process from the remaining morpheme determining step S310. In this way, the allowed word table 200 illustrated in FIG. 3 is generated based on the morpheme string illustrated in FIG. 6(b). In the above-mentioned process, the divided morphemes can be registered in the allowed word table 200 even though they are not included in the morpheme dictionary, and it is possible to count the number of appearances.

In the allowed word table 200 generated in this way, the connection aspect between two morphemes included in the program additional data and the number of appearances thereof is accumulated. Since the connection aspect strongly reflects the generation characteristics of the program additional data by the broadcasting station 112 in the region in which the user lives or the broadcasting station 112 by which the user mostly views the programs broadcasted, the allowed word table 200 responds to regional characteristics or the user's taste.

In the existence determining step S316, the connection aspect between the preceding link morpheme pword and the main morpheme "word" is determined in order to exclude a case in which the morphemes which are offensive to public order and morals are connected to generate a character string which is not offensive to public order and morals.

For example, even though a character string "基地外" means "基地の外", it is offensive to public order and morals according to a reading method. In this case, when the data processing unit 184 independently determines

"基地" and "外", there is a concern that the character string "基地外" will not be excluded. Under the broadcasting code of ethics, an expression "基地外" is not used, but an expression "基地の外" is used.

Therefore, a combination of the morphemes "基地" and or a combination of the morphemes "の" and "外" can be registered in the allowed word table 200, and the character string "基地外" can be excluded from the allowed word table 200.

For ease of understanding an example is described, in which a combination of a target morpheme and a preceding link morpheme thereof is accumulated. However, combinations of n successive morphemes may be registered in the allowed word table 200. In this case, it is possible to strictly filter the combinations of the morphemes (it is called a 2-gram method when there are two morphemes and an n-gram method when n successive morphemes are connected).

Depending on applications, the registration determining process using the allowed word table 200 may be performed while some symbols in the text body remain without being replaced. An object of the present embodiment is to extract combinations of the morphemes and the number of appearances from text data different from the text data for generating the morpheme dictionary. Therefore, the table update unit 180 may extract morphemes from other information items which are possibly included in the program stream, as well as the text body of the program additional data (caption data or program information) included in the program stream.

Here, an example is described, in which the program stream is acquired through the tuner unit 152 or the communication unit 154. However, the program stream may be acquired from various channels, such as a program stream file stored in a storage medium, as long as it follows the broadcasting code of ethics. In addition, the filtering device 120 may include a plurality of combinations of the tuner units 152 and the DEMUX units 156, receive program streams from a plurality of broadcasting stations 112 in parallel, and collect a large number of morphemes at a high speed. In addition, the filtering device 120 may operate a functional unit for generating the allowed word table 200 independently from a functional unit for watching a program, for example, to continuously receive program streams for 24 hours, thereby generating the allowed word table 200.

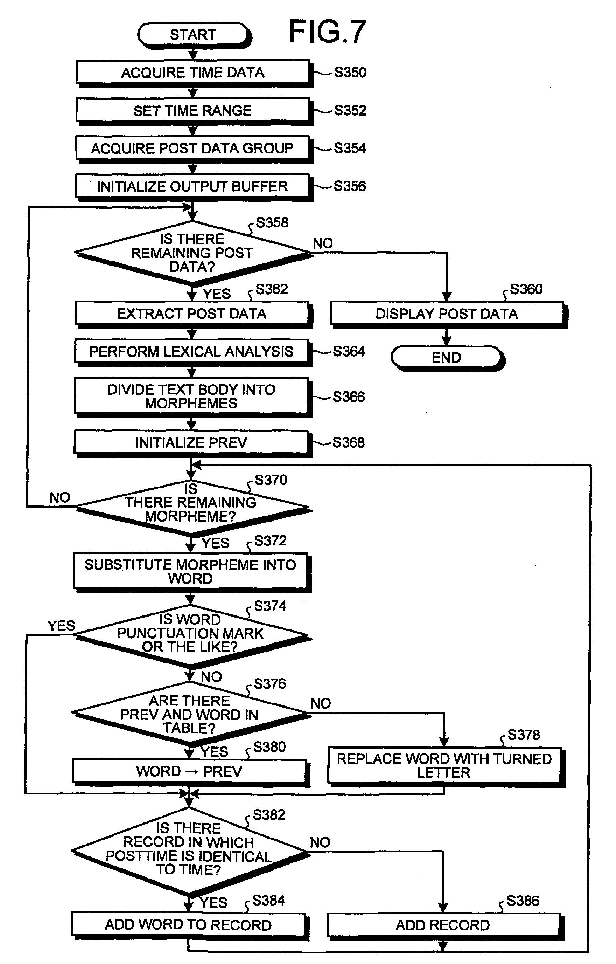

FIG. 7 is a flowchart illustrating the process flow of the filtering method. In particular, FIG. 7 illustrates a process of filtering text data using the allowed word table 200 generated in FIG. 5 in the filtering method.

First, the data acquiring unit 182 acquires time data included in the program stream of the program which is broadcasted (S350), sets a value obtained by subtracting predetermined seconds (for example, 10 seconds) from the acquired time data to a start time variable STIME, and sets the time data to an end time variable ETIME (S352). Then, the data acquiring unit 182 acquires a post data group posted in the time range from the start time variable STIME to the end time variable ETIME from the service providing server 140 through the communication unit 154 (S354) and initializes an output buffer provided in the RAM of the central control unit 162 (S356).

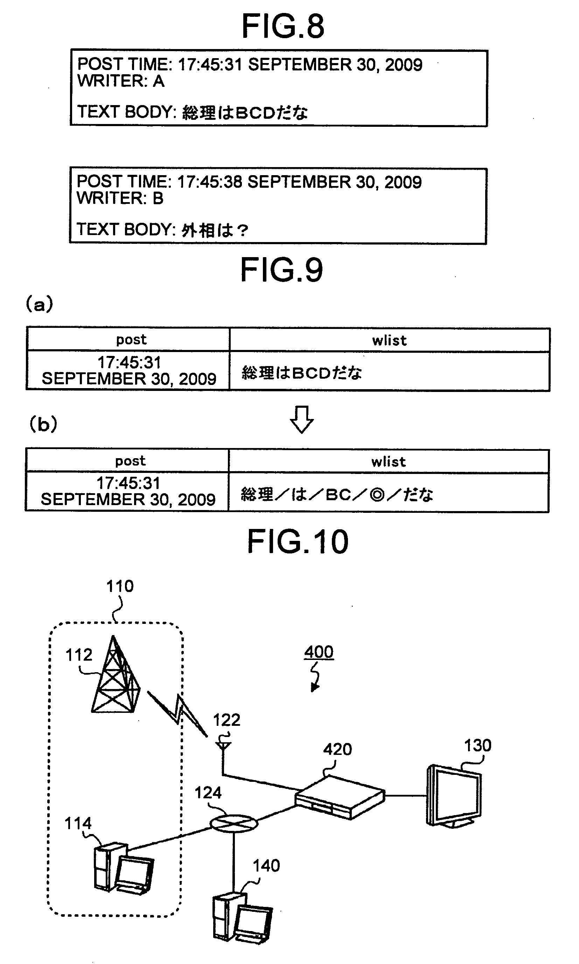

FIG. 8 is a diagram illustrating an example of the post data group. For example, when the data acquiring unit 182 acquires time data "17:45:40 September 30, 2009" from the DEMUX unit 156, it acquires a post data group corresponding to a time range (STIME, ETIME) = ("17:45:30 September 30, 2009", "17:45:40 September 30, 2009"). The post data group corresponds to post data with time data "17:45:31 September 30, 2009" and post data with time data "17:45:38 September 30, 2009" illustrated in FIG. 8.

The data processing unit 184 determines whether there remains post data which has not been subjected to the filtering process (S358). When it is determined that there remains no post data which has not been subjected to the filtering process (NO in S358), the display control unit 186 displays the filtered post data stored in the output buffer on the display device 130 (S360) and ends the process.

A statement for forming the table structure of the output buffer can be represented by SQL as follows:

```
create table output_buffer (
    post timestamp not null,
    wlist text list,
    UNIQUE (post)
);
```

The output buffer is formed in a table structure in which the post date and time post (acquisition date and time information) and a morpheme string wlist of the post data are combined with each other. The post date and time post means the date and time when data is posted and the morpheme string wlist means a filtered morpheme string. In addition, the output buffer is set to be unique to the post date and time post.

When it is determined that there remains post data which has not been subjected to the filtering process (YES in S358), the data processing unit 184 extracts one post data item at the head of the remaining post data group, assigns the post date and time post to a post date and time variable POSTTIME, assigns the text body of post source data to a text variable TEXT, and deletes target post data from the post data group (S362). The data processing unit 184 performs lexical analysis for the text variable TEXT to replace two or more punctuation marks with one punctuation mark (for example, "o ", ".", ", ", and ",") and delete line feed, a symbol, or a blank (S364). Then, the data processing unit 184 divides the text body of the lexically analyzed post data into morphemes using the morpheme dictionary (S366). In this case, in the morpheme engine serving as the data processing unit 184, the punctuation mark is used as a delimiter between the morphemes.

Then, the data processing unit 184 initializes the preceding morpheme variable PREV (assigns null NULL) (S368) and determines whether there remains a morpheme remaining in the target post data (S370). When it is determined that there remains no morpheme remaining in the target post data (NO in S370), the data processing unit 184 repeatedly performs the process from the remaining post data determining step S358 in order to determine new post data.

When there remains a morpheme remaining in the target post data (YES in S370), the data processing unit 184 extracts one morpheme from the head of the morpheme string in the text body of the post data and assigns it to the morpheme variable WORD (S372). Then, the data processing unit 184 determines whether the morpheme variable WORD is a punctuation mark or a blank (S374). When it is determined that the morpheme variable WORD is a punctuation mark or a blank (YES in S374), the process proceeds to a time determining step S382.

The lexical analysis step S364 or the punctuation mark determining step S374 is performed in order to prevent the connection relation between the morphemes from being broken due to the separation of a word at an unintended position caused by the insertion (modification) of a punctuation mark, a blank, line feed, or a symbol.

When it is determined that the morpheme variable WORD is not a punctuation mark or a blank (NO in S374), the data processing unit 184 determines whether there is a record in which the preceding link morpheme pword is equal to the value of the preceding link morpheme variable PREV and the main morpheme "word" is equal to the value of the morpheme variable WORD in the allowed word table 200. When it is determined that there is the record, the data processing unit 184 determines whether the number of appearances wnum thereof is equal to or greater than the first threshold value $\alpha$ (S376). On the other hand, when there is no matched combination of the morphemes, or when there is a matched combination of the morphemes, but the number of appearances wnum is less than the first threshold value $\alpha$ (NO in S376), the data processing unit 184 initialize the preceding link morpheme variable PREV (assigns null) and replaces the morpheme variable WORD with a special symbol "◎" indicating a turned letter (S378). The reason why the data processing unit 184 replaces a combination of the morphemes of which the number of appearances wnum is less than the first threshold value $\alpha$ with a special symbol is that, when the number of appearances wnum is less than the first threshold value $\alpha$, the number of appearances of the program additional data is not sufficient and the program additional data is not appropriate as an allowed word, which is a combination of the morphemes.

FIG. 9 is a diagram illustrating the process of the data processing unit 184. For example, when the text body of the post data is text data **"総理は**BCD**だな"** illustrated in FIG. 9(a) (here, it is assumed that BCD is a successive character string which is offensive to public order and morals), the data processing unit 184 stores a morpheme **"総理"** in the output buffer since there is a record including the preceding link morpheme pword = "NULL" and the main morpheme "word" = **"総理"** in the allowed word table 200 illustrated in FIG. 3. In addition, since successive morphemes "BC" and "D" are not in the allowed word table 200, the data processing unit 184 replaces the morpheme "D" corresponding to the morpheme variable WORD among the morphemes with the special symbol "◎" to form a morpheme string illustrated in FIG. 9(b). For ease of understanding, a symbol [/] is inserted between the morphemes. However, the symbol [/] is not treated as the actual symbol.

When there is a matched morpheme combination in the allowed word table 200 and the number of appearances wnum of the morphemes is equal to or greater than the first threshold value $\alpha$ (YES in S376), the data processing unit 184 assigns the value of the morpheme variable WORD to the preceding link morpheme variable PREV (S380). Then, the data processing unit 184 determines whether there exists a record in which the value of the post date and time variable POSTTIME is identical to the post date and time post in the output buffer (S382). When it is determined that there is the record (YES in S382), the data processing unit 184 adds the value of the morpheme variable WORD to the tail of the morpheme string wlist of the record (S384) and repeats the process from the remaining morpheme determining step S370. When it is determined that the record is absent (NO in S382), the data processing unit 184 adds a new record in which the post date and time post and the morpheme string wlist are the preceding link morpheme variable POSTTIME and the morpheme variable WORD, respectively (S386) and repeats the process from the remaining morpheme determining step S370.

For ease of understanding, it is assumed that the first threshold value $\alpha$ is 1. However, needless to say, the first threshold value $\alpha$ can be appropriately changed depending on applications. The existence determining step S376 may be performed using the probability of occurrence calculated by the following Expression 1 instead of the number of appearances wnum per se:

$$\text{the value of wnum of the corresponding record / the}$$

$$\text{sum of the values of wnum of all records} \qquad (1)$$

According to this structure, the data processing unit 184 can perform the existence determining step S376 based on the ratio of the allowed word table 200 to a population. Therefore, when the number of appearances is not updated after an arbitrary morpheme becomes an allowed word when a population is small, the probability of occurrence is reduced as the size of the population increases. As a result, the allowed word is likely to be excluded. In this way, it is possible to automatically exclude the morpheme with a low frequency of appearance.

As described above, the filtering device 120 according to the present embodiment can appropriately change post data including the words which are offensive to public order and morals to post data without including the words, using combinations of the morphemes which are acquired from the program additional data included in the program stream using the allowed word table 200 different from the morpheme dictionary and the number of appearances of the morphemes.

As described above, the allowed word table 200 strongly reflects the generation characteristics of the program additional data by the broadcasting station 112 in the region in which the user lives or the broadcasting station 112 which broadcasts programs for the user. Therefore, the allowed word table 200 responds to regional characteristics or the user's taste. As a result, it is easy for the filtered post data to remain as a word corresponding to the regional characteristics or the user's taste.

In the above-described embodiment, an exemplary explanation is made such that the post data acquired from the electronic bulletin board is filtered. However, a filtering target is not limited to the post data, but various kinds of text data, such as various kinds of data displayed on a Web browser or data stored in a storage medium, may be filtered.

(Second embodiment: program providing system 400)

In the first embodiment, the filtering device 120 and the filtering method have been described which appropriately filter arbitrary text data. In a second embodiment, a program search device 420 and a program search method will be described which appropriately search for a program or a predetermined scene in the program using the filtering technique according to the first embodiment.

FIG. 10 is a diagram illustrating the schematic connection relationship of the program providing system 400 according to the second embodiment. The program providing system 400 includes a program providing device 110, a program search device 420, a display device 130, and a service providing server 140. The program providing device 110, the display device 130, and the service providing server 140 have substantially the same operations as the program providing device 110, the display device 130, and the service providing server 140 according to the first embodiment and thus the description thereof will be omitted.

Similarly to the filtering device 120 according to the first embodiment, the program search device 420 receives program streams of various programs, such as a terrestrial digital broadcast program, a BS/CS digital broadcast program, a cable television broadcast program, an IP broadcast program, and a video on demand, from a broadcasting station 112 serving as the program providing device 110 through an antenna 122 and from a program providing server 114 serving as the program providing device 110 through a communication network 124, such as the Internet, and generates an allowed word table 200 for filtering.

The program search device 420 stores the programs, generates index data of the programs using the allowed word table 200, and gives the index data to the stored programs. When the user tries to search for a program or a predetermined scene in the program, the program search device 420 rapidly extracts the program or the predetermined scene in the program which is desired by the user based on the index data. Hereinafter, each functional unit forming the program search device 420 will be described first, subsequently a program search method using the program search device 420 will be described in detail.

(Program search device 420)

In a structure in which a plurality of programs are stored and the stored programs are viewed later (for example, HDR: Hard Disk Recorder), when caption data is included in a program stream, the caption data may be associated as index data with each program and the HDR may rapidly present the program which is desired by the user based on the index data. However, the caption data is not necessarily included in the program stream. For example, caption data is not included in a broadcast program which cannot present the content thereof in advance, such as news or live broadcasting; and even when caption data is included in the broadcast program, only limited information, such as a title, is included in the broadcast program. In this case, the index data may or may not be associated with the program, depending on the program.

For a program stream which does not include caption data, the program search device 420 according to the present embodiment acquires information corresponding to the index data from a channel other than broadcasting and tries to associate the acquired information as the index data with the program. For example, an appropriate example of the information acquisition destination is the service providing server 140 according to the first embodiment which opens post data for the program broadcasted by the arbitrary broadcasting station 112 as an electronic bulletin board to the public. The program search device 420 compares, for example, a program viewing time and the post date and time of post data, considers the post data whose post date and time is identical to the program viewing time to be related to the program, and uses the post data as index data.

However, in the service providing server 140, restrictions on the sentence of the post data are loose. Even when the sentence is filtered, the post data may be modified to freely represent sentences since the forbidden word table is used. Therefore, when the post data is used to generate index data, all text data including words or sentences which are offensive to public order and morals is associated as index data and the amount of index data is very large, which causes a delay in the search process. In this case, it seems that the amount of index data increases and the search hit rate increases. However, in practice, since there is a large amount of index data which is not suitable for search, such as meaningless text data in ASCII art, the hit rate is not necessarily high. In addition, for example, when Chinese characters corresponding to modification are registered as the index data, not only they do not function as the index data of the program but they also are hit by an unintended search for other programs. As a result, search accuracy becomes low.

The amount and quality of index data are different in the program associated with a large amount of index data and the program associated with index data based on caption data. Therefore, it may be difficult to appropriately extract the program which is desired by the user, depending on search keywords. These problems are solved by the following program search device 420 and program search method.

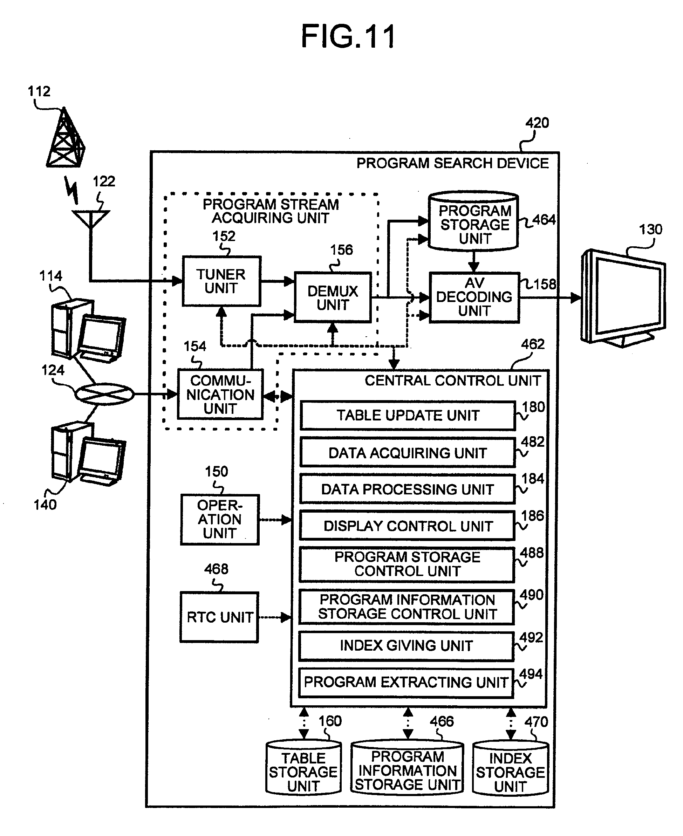

FIG. 11 is a functional block diagram illustrating the schematic structure of the program search device 420. In FIG. 11, the flow of data is represented by a solid arrow and the flow of a control signal is represented by a dashed arrow. The program search device 420 includes an operation unit 150, a tuner unit 152, a communication unit 154, a DEMUX unit 156, an AV decoding unit 158, a table storage unit 160, a central control unit 462, a program storage unit 464, a program information storage unit 466, an RTC (Real Time Clock) unit 468, and an index storage unit 470. The tuner unit 152, the communication unit 154, and the DEMUX unit 156 function as a program stream acquiring unit which acquires program streams.

The central control unit 462 also functions as a table update unit 180, a data acquiring unit 482, a data processing unit 184, a display control unit 186, a program storage control unit 488, a program information storage control unit 490, an index giving unit 492, and a program extracting unit 494.

The operation unit 150, the tuner unit 152, the communication unit 154, the DEMUX unit 156, the AV decoding unit 158, the table storage unit 160, the table update unit 180, the data processing unit 184, and the display control unit 186 have substantially the same structure as those according to the first embodiment and thus repeated description thereof will be omitted. Here, the central control unit 462, the program storage unit 464, the program information storage unit 466, the RTC unit 468, the index storage unit 470, the data acquiring unit 482, the program storage control unit 488, the program information storage control unit 490, the index giving unit 492, and the program extracting unit 494 having the structures different from those in the first embodiment will be mainly described.

The program storage control unit 488 stores programs in the program storage unit 464 such that the programs can be searched by channel numbers and time data.

The program storage unit 464 is a storage medium, such as flash memory or an HDD, and stores one program or a plurality of programs. Examples of the program storage unit 464 may include optical disk media, such as a DVD (Digital Versatile Disc) or a BD (Blu-ray Disc), magnetic media, such as a magnetic tape and a magnetic disk, and external storage media, such as flash memory and a portable HDD, which are detachable from the program search device 420.

The program storage unit 464 is a file system which can be accessed at random. Other functional units can designate an arbitrary time range and read video data, audio data, and caption data stored in the program storage unit 464 in the designated time range. In the present embodiment, since a random access method is not described in detail since it is a known technique. For example, a program is divided into files every hour, the divided files are stored, and a file name which includes a channel number and a storage start time, for example, "27CH_2009/9/30 17:00:00. TS" is given to each of the divided files. In this way, it is possible to achieve a rough random access.

In addition, a file offset (byte) at an arbitrary reproduction time can be calculated for random access to an arbitrary scene in the program. For example, when the total size (byte) of a file per hour is TOTAL, the absolute reproduction time of an arbitrary scene is T1, and the absolute time of the top of the file obtained from the file name is T0, the file offset is calculated by the following Expression 2:

$$\text{TOTAL} \, / \, 3600 \times (T1 - T0) \qquad\qquad (2)$$

Here, it is assumed that the calculation result of (T1-T0) is converted into seconds.

When program information is included in the program stream acquired via the tuner unit 152 or the communication unit 154 serving as a program stream acquiring unit, the program information storage control unit 490 extracts the program information from the program stream and stores the program information as a program information table in the program information storage unit 466.

A statement for generating the program information table can be represented in SQL as follows:

```
create table epg_table (
    phych integer not null,
    serviceid integer not null,
    eventid integer not null,
    sttime timestamp not null,
    edtime timestamp not null,
    title text not null,
    capflg integer not null,
    UNIQUE(serviceid, eventid, sttime)
);
```

The program information includes at least a channel number phych, a service ID: serviceid, an event ID: eventid, a program start time sttime, a program end time edtime, a program name title, and a caption flag capflg. In the program information table, combinations of the service ID: serviceid, the event ID: eventid, and the program start time sttime are unique. The program information storage control unit 490 can acquire information other than the caption flag capflg from the program information. In addition, the service ID is a unique numerical value corresponding to one or more programs of one broadcasting station 112, and the event ID is a unique numerical value corresponding to one or more events in one program.

During the registration of the program information in the program information table, when program information having the same service ID: serviceid, program start time sttime, and program end time edtime as the program information has been registered in the program information storage unit 466, the program information storage control unit 490 deletes the program information and registers newly extracted program information. In this way, it is possible to exclude the overlap between program frames in the same program. In addition, when program information is newly registered, the program information storage control unit 490 sets the caption flag capflg of the program information to 0 (unprocessed).

The program information storage unit 466 is constituted by a storage medium, such as flash memory or an HDD, and stores a program information table, which is a table including program information included in the program stream, based on a control command from the program information storage control unit 490. In addition, the program information storage unit 466 functions as an EPG database, and other functional units (for example, the index giving unit 492 or the program extracting unit 494) searches the program information table stored in the program information storage unit 466 under arbitrary conditions.

The data acquiring unit 482 acquires text data (second text data) for a program. In the present embodiment, the data acquiring unit 482 acquires post data (second text data) for a program which is broadcasted by the arbitrary broadcasting station 112 from the service providing server 140 which opens the post data as an electronic bulletin board to the public, and associates the post date and time (acquisition date and time information) with the post data. As described above, in the electronic bulletin board, an unspecified number of writers post the post data substantially in real time via the communication network 124, as if it were live broadcast, for a series of programs broadcasted by a specific broadcasting station 112. In the present embodiment, the data acquiring unit 482 acquires the post data from the electronic bulletin board which is provided exclusively for the arbitrary broadcasting station 112. The data acquiring unit 482 may specify the title of a thread related to the arbitrary broadcasting station 112 and acquire the post data thereof, in a site only for posting. In addition, when the broadcasting station 112 manages an independent site for collecting opinions therefor, the data acquiring unit 482 may acquire the post data through the site.

Specifically, the data acquiring unit 482 corresponds to a Web browser, establishes communication with the service providing server 140 through the communication unit 154, transmits request information including the time range and the channel number, and acquires a post data group (text data group) within the time range as a response. When the data acquiring unit 482 acquires the post data group, the data processing unit 184 divides post data (second text data item) into morphemes. Then, when the divided morphemes have not been registered in the allowed word table 200, or although the morphemes have been registered in the allowed word table 200, but the number of appearances corresponding to the morphemes is less than a predetermined first threshold value $\alpha$, the data processing unit 184 replaces the morphemes with a predetermined character or a plurality of predetermined characters and recombines as post data (third text data item).

The RTC unit 468 is constituted with an RTC circuit and bears a role of a a timer of the program search device 420 per se.

The index giving unit 492 gives (associates), as index data, a set of the morphemes extracted from the program additional data or the post data and the acquisition date and time information associated with the program additional data or the post data (second text data item) to (with) the program stored in the program storage unit 464, and stores the set as an index table in the index storage unit 470. A statement for generating the index table can be represented by SQL as follows:

```
create table index_table (
    word text not null,
    postime timestamp not null,
    serviceid integer not null,
    eventid integer not null,
    UNIQUE(word, postime, serviceid, eventid)
);
```

The index table includes at least a search word "word", a search time postime, the service ID: serviceid of the program, and the event ID: eventide of the program. In addition, in the index table, combinations of the search word "word", the search time postime, the service ID: serviceid of the program, and the event ID: eventide of the program are unique.

In the present embodiment, when caption data is included in a program stream (caption data is added to a program), the index giving unit 492 gives a set of the caption data and the acquisition date and time information thereof as index data to the program corresponding to the caption data. On the other hand, when caption data is not included in the program stream (caption data is not added to the program), or when it is considered that caption data is not included in the program stream (caption data is not added to the program), the index giving unit 492 gives a set of the recombined text data (third text data item) and the acquisition date and time information thereof as index data to the program corresponding to the caption data. The phrase "considered that caption data is not included in the program stream (caption data is not added to the program) means that a caption ratio, which will be described below, is low.

Specifically, the index giving unit 492 extracts unprocessed (caption flag capflg = 0) program information from the program information storage unit 466, extracts the caption data of the program corresponding to the program information from the program storage unit 464, and uses the extracted data as index data. In this case, when caption data does not exist in the program stream or it is considered that caption data does not exist in the program stream (when caption data is not added to the program or it is considered that caption data is not added to the program), the index giving unit 492 causes the data acquiring unit 482 to acquire post data (text data) from the service providing server 140 and causes the data processing unit 184 to generate index data capable of searching for the program. Then, in order to give the index data to the program, the index giving unit 492 registers the index data in the index table of the index storage unit 470.

The provision of the index giving unit 492 makes it possible to appropriately select one of the caption data included in the program stream and the post data of the service providing server 140 as index data to be given to the program and to generate appropriate index data for search. In this way, even when there is no caption data, an index is given. Therefore, it becomes possible to improve search accuracy.

In the present embodiment, the caption data in the program additional data which is used by the table update unit 180 to update the allowed word table 200 is discriminated from the caption data which is used as index data by the index giving unit 492. However, the allowed word table 200 can be updated using the caption data used as the index data.

The index storage unit 470 is constituted by a storage medium, such as flash memory or an HDD, and stores an index table including index data based on a control command from the index giving unit 492.

The program extracting unit 494 receives an operation input from the user through the operation unit 150 and displays the operation result on the display device 130 through a GUI (Graphical User Interface). In addition, the program extracting unit 494 extracts the program stored in the program storage unit 464 or a predetermined scene in the program based on, for example, a search keyword input by the user, with reference to the index table.

(Program search method)

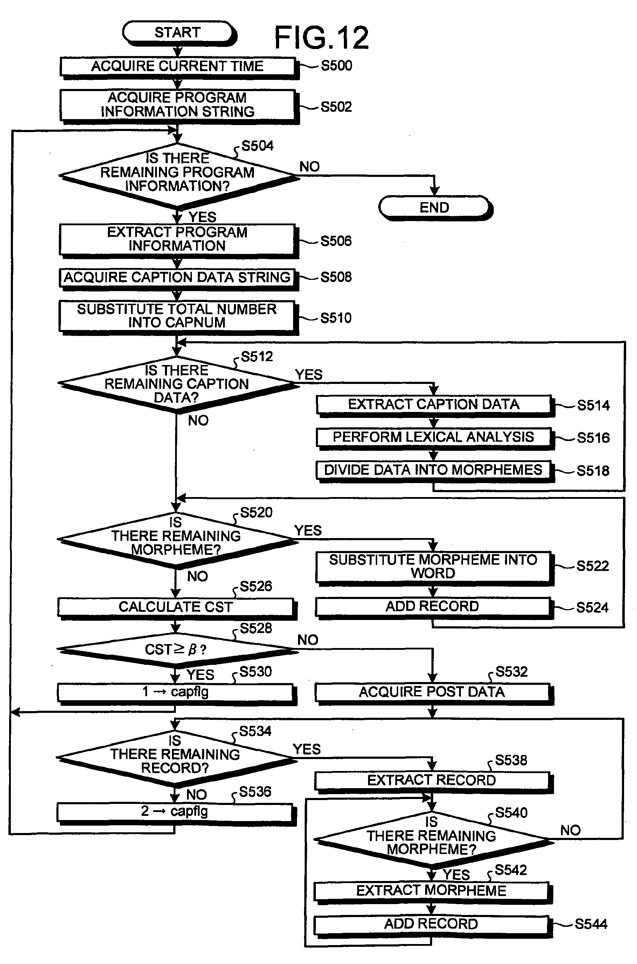

FIG. 12 is a flowchart illustrating the process flow of a program search method. In particular, FIG. 12 illustrates an index data giving process in the program search method. First, the index giving unit 492 acquires the current time from the RTC unit 468 and assigns the current time to a time variable NOW (S500). In addition, the index giving unit 492 searches for program information in which the caption flag capflg is 0 (unprocessed) and the program end time edtime is earlier than the time variable NOW from the program information storage unit 466 and acquires the program information as a program information string (S502).

The index giving unit 492 determines whether program information remains in the program information string (S504). When it is determined that program information remains (YES in S504), the index giving unit 492 extracts one program information item from the head of the program information string, assigns the service ID: serviceid and the event ID: eventide into a service ID variable SERVICEID and an event ID variable EVENTID, respectively, and deletes target program information from the program information string (S506). When no program information remains in the program information string (NO in S504), the index data giving process ends.

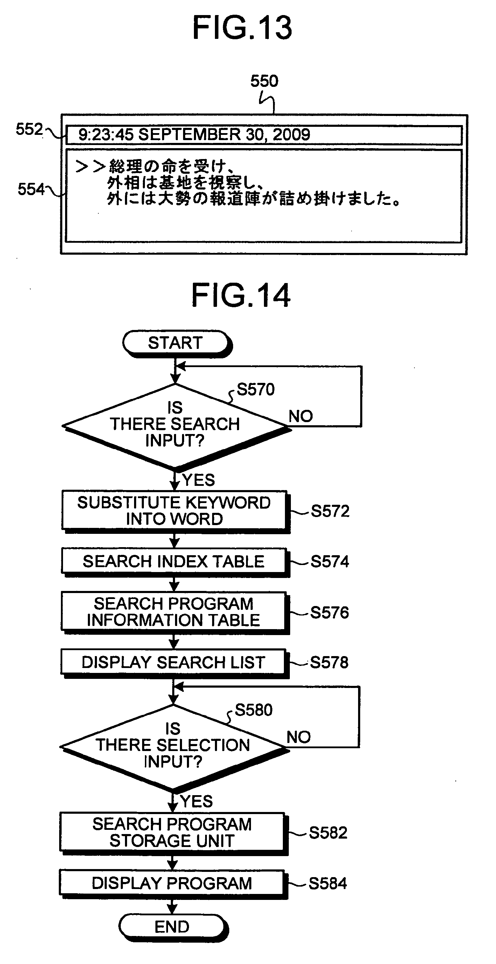

Subsequently, the index giving unit 492 acquires a caption data string from program additional data, which is a file related to a channel number phych and is included in the time range from the program start time sttime to the program end time edtime, from the program storage unit 464 (S508). Then, the index giving unit 492 assigns the total number of caption data items included in the acquired caption data string to a variable CAPNUM (S510). FIG. 13 is a diagram illustrating an example of the caption data. As illustrated in FIG. 13, for example, caption data 550 includes at least a caption time 552 and a text body 554. In the present embodiment, for simplicity of explanation, only the caption data in the program additional data is treated. However, a set of time and text may be extracted from the program additional data other than captions. For example, a set of (the program start time sttime and a title "title") in the program information may be added to the head of the caption data string.

Then, the index giving unit 492 determines whether one or more caption data items remain in the caption data string (S512). When it is determined that one or more caption data items remain in the caption data string (YES in S512), the index giving unit 492 extracts one caption data item from the head of the caption data string, assigns the caption time 552 to a time variable POSTIME, assigns the text body 554 to a text variable TEXT2, and deletes target caption data from the caption data string (S514). In addition, the index giving unit 492 performs lexical analysis on the text variable TEXT2 to replace one or more line feeds, symbols, or blanks with one blank (S516), and divides the text data into morphemes using the morpheme dictionary (S518). In this case, in a morpheme engine functioning as the index giving unit 492, the blank is a delimiter between the morphemes. The above is a process of dividing a caption data string into morpheme strings, and the process is repeatedly performed the number of times corresponding to CAPNUM. When no caption data remains in the caption data string (NO in S512), the process proceeds to a remaining morpheme determining step S520.

Subsequently, the index giving unit 492 determines whether one or more morphemes remain in the morpheme string of the caption data (S520). When it is determined that one or more morphemes remain in the morpheme string (YES in S520), the index giving unit 492 extracts one morpheme from the head of the morpheme string, assigns the morpheme to a morpheme variable WORD, and deletes a target morpheme from the morpheme string (S522). Then, the index giving unit 492 adds a record in which (word, postime, serviceid, eventid) = (WORD, POSTIME, SERVICEID, EVENTID) is established to the index table of the index storage unit 470 (S524). As described above, in the index table, combinations of the search word "word", the search time postime, the service ID: serviceid of the program, and the event ID: eventide of the program are unique. Therefore, when the same word appears a plurality of times in the caption data of the same program at the same time, the second and subsequent records are ignored.

When no morpheme remains in the morpheme string (NO in S520), the index giving unit 492 calculates a caption ratio CST using the following Expression 3 (S526): In this case, the calculation result of (the program end time edtime - the program start time sttime) is converted into seconds, and the caption ratio CST indicates the number of caption data items per second.

$$CST = CAPNUM / (edtime - sttime) \qquad (3)$$

Since the caption ratio CST of the program which is regarded to have captions is statistically in the range of 0.1 to 0.25, a second threshold value β is determined to be 0.1. The index giving unit 492 determines whether the caption ratio CST is equal to or greater than the second threshold valuer β (S528). When the caption ratio CST is equal to or greater than the second threshold value β (YES in S528), the index giving unit 492 considers that the caption data string is effective, sets the caption flag capflg of the record to 1 (caption data is present) in the program information table of the program information storage unit 466 (S530), and repeats the process from the remaining program information determining step S504. Here, the appearance ratio (caption ratio) of the caption data in the program additional data is compared with the second threshold value β. Similarly, the index giving unit 492 may compare the total number of data items in the text data of the program information with a third threshold value and determine the effectiveness of the caption data string based on the comparison result.

Similarly, the index giving unit 492 may compare the number of morphemes in the morpheme string output in S518 with a fourth threshold value and determine the effectiveness of the caption data string based on the comparison result.

On the other hand, when the caption ratio CST is less than the second threshold value β (NO in S528), the index giving unit 492 determines that the caption data string is not sufficient as the index data, and causes the data acquiring unit 482 and the data processing unit 184 to acquire and process the post data within the time range from the program start time sttime to the program end time edtime, respectively (S532). The processed post data is stored in the output buffer provided in the RAM of the central control unit 462. The post data acquiring step S532 is substantially the same as that illustrated in FIG. 7 in the first embodiment and thus the description thereof will be omitted. Here the sentence "caption data string is not sufficient as the index data" means that, since caption data is not included in a broadcast program whose content cannot be presented in advance, such as news or live broadcasting. Or even if included, it is only limited information, such as a title of the broadcast program, therefore reliability is low. In this case, post data is used rather than a small amount of caption data to improve reliability.

Subsequently, the index giving unit 492 determines whether there is a record remaining in the output buffer (S534). When it is determined that there is no record remaining in the output buffer (NO in S534), the index giving unit 492 sets the caption flag capflg of the record to 2 (there is a comment) in the program information table of the program information storage unit 466 (S536) and repeats the process from the remaining program information determining step S504.

When it is determined that there is a record remaining in the output buffer (YES in S534), the index giving unit 492 extracts the record, assigns the post date and time post to the time variable POSTIME, and acquires a morpheme string wlist (S538).

Subsequently, the index giving unit 492 determines whether one or more morphemes remain in the morpheme string of the record (S540). When it is determined that no morpheme remains in the morpheme string (NO in S540), the index giving unit 492 repeats the process from the remaining record determining step S534.

When it is determined that one or more morphemes remain in the morpheme string of the record (YES in S540), the index giving unit 492 extracts one morpheme from the head of the morpheme string, assigns the morpheme to the morpheme variable WORD, and deletes a target morpheme from the morpheme string (S542). Then, the index giving unit 492 adds a recording in which (word, postime, serviceid, eventid) = (WORD, POSTIME, SERVICEID, EVENTID) is established to the index table of the index storage unit 470 (S544).

The index data generated by the index giving unit 492 makes it possible to increase search accuracy since caption data is used as a search information source in the program with a large number of captions. In addition, the index data makes it possible to achieve a wide and shallow search since post data is used as a search information source in the program with a small number of captions.

FIG. 14 is a flowchart illustrating the process flow of the program search method. In particular, FIG. 14 illustrates a program search process in the program search method. First, when a search keyword is input from the user (YES in S570), the program extracting unit 494 assigns the keyword to the morpheme variable WORD (S572). Then, the program extracting unit 494 searches the index table of the index storage unit 470 (S574), and searches the program information table of the program information storage unit 466 using the service ID: serviceid and the event ID: eventide included in each row of the search result to acquire, for example, a program name (S576). Then, the program extracting unit 494 displays a search list, which is the search result, on the display device 130 to present the search result to the user (S578).

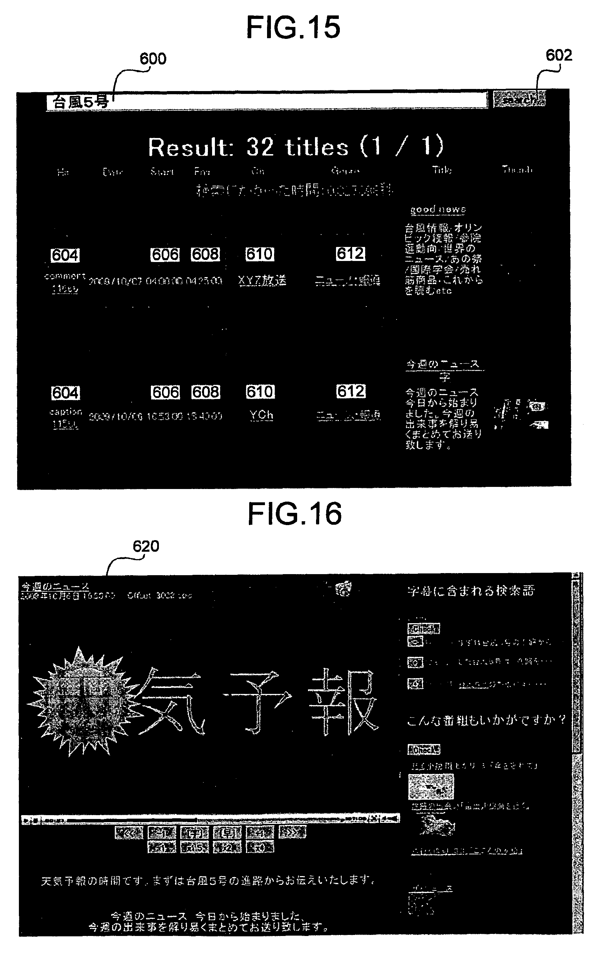

FIG. 15 is a diagram illustrating an example of the display of the search list. When the user inputs a search keyword to an input region 600 and clicks a search start button 602, the program extracting unit 494 searches for index data based on the input keyword and displays a program information list based on the searched index data, as illustrated in FIG. 15. The program extracting unit 494 replaces each record in the program information table of the program information storage unit 466 such that the user can easily understand the record, and displays it in an appropriate layout. For example, in the example illustrated in FIG. 15, a caption flag (caption: capflg = 1 and comment: capflg = 2) 604, a program start time 606, a program end time 608, a service ID 610, and an event ID 612 are displayed.

Subsequently, when receiving a selection input to select one program in the search list from the user (YES in S580), the program extracting unit 494 searches the program storage unit 464 using the channel number phych acquired from the program information storage unit 466 and the search time postime obtained from the index storage unit 470 (S582), and the AV decoding unit 158 displays the program extracted by the search process on the display device 130 (S584).

FIG. 16 is a diagram illustrating an example of the display of an image on the display device 130. As can be seen from FIG. 16, when a typical display device 130 having operation modes, such as, the reproduction, stop, and seeking modes by a GUI, starts, a search time 620 associated with a search keyword is selected as a reproduction start point.

In this way, the program search process enables the user to browse an arbitrary program associated with the search keyword or an arbitrary scene in the program among the programs corresponding to several thousands of hours.

In the above-mentioned program search device 420 and program search method, for the program stream which does not include caption data, it is possible to acquire information corresponding to index data from other channels, for example, the post data of the electronic bulletin board and associate the information as index data with the program. Therefore, the program search device 420 and the program search method can give index data to all programs, regardless of the presence or absence of caption. In this way, it is possible to improve the search accuracy of programs.

In the program search device 420 and the program search method, when the post data is used as index data, only the post data which has been processed to text data following the broadcasting code of ethics is used as index data, thereby excluding unnecessary text data, such as words or sentences which are offensive to public order and morals, Chinese characters which are not related to a corresponding program, and meaningless text data in ASCII art.

Therefore, only appropriate text data can be associated as index data with the program. In this way, it is possible to prevent a significant increase in the amount of index data or prevent search accuracy from deteriorating due to unnecessary index data.

The program search device 420 and the program search method filter post data to limit the index data associated with the program, thereby maintaining the quantitative balance with the caption data which is included in the program stream in advance. Therefore, the search hit rate is balanced. In addition, since filtering is performed according to the broadcasting code of ethics, the processed post data becomes text data following the broadcasting code of ethics and has the same word and sentence quality as the caption data which is included in the program stream in advance in that it follows the broadcasting code of ethics. As such, the program associated with the index data by the post data and the program associated with the index data by the caption data have the balance between the amounts or qualities of the index data. Therefore, search uniformity is maintained and the user can appropriately extract a desired program and a predetermined scene in the program.

As described in the first embodiment, the allowed word table 200 is updated in a closed state in the filtering device 120. Therefore, it is possible to effectively generate the allowed word table 200 through the tuner unit 152 or the communication unit 154 and respond to modification for avoiding filtering while minimizing the risk of falsification.

In addition, the allowed word table 200 strongly reflects the generation characteristics of the program additional data by the broadcasting station 112 in the region in which the user lives or the broadcasting station 112 which broadcasts programs for the user. Therefore, the allowed word table 200 responds to regional characteristics or the user's taste. As a result, in the filtered post data, it is easy for words corresponding to the regional characteristics or the user's taste to remain.

The preferred embodiments of the invention have been described above with reference to the accompanying drawings, but the invention is not limited to the above-described embodiments. It will be apparently understood by those skilled in the art that various modifications or changes of the invention can be made without departing from the scope and spirit of the claims and are also included in the technical scope of the invention.

For example, in the above-described embodiments, program additional data with high reliability is used based on the broadcasting code of ethics. However, data to be acquired is not limited to the program additional data. For example, in a target field, words or sentences with reliability may be automatically acquired. In this case, the embodiments can be applied to various fields.

In the specification, the processes of the filtering method or the program search method are not necessarily performed in chronological order described in the flowcharts. Rather, the processes of the filtering method or the program search method may be performed in parallel, or the filtering method or the program search method may include processes according to sub-routines.

## Reference Signs List

| | |
|---|---|
| 100, 400 | PROGRAM PROVIDING SYSTEM |
| 120 | FILTERING DEVICE |
| 160 | TABLE STORAGE UNIT |
| 180 | TABLE UPDATE UNIT |
| 182, 482 | DATA ACQUIRING UNIT |
| 184 | DATA PROCESSING UNIT |
| 200 | ALLOWED WORD TABLE |
| 420 | PROGRAM SEARCH DEVICE |
| 464 | PROGRAM STORAGE UNIT |
| 492 | INDEX GIVING UNIT |
| 494 | PROGRAM EXTRACTING UNIT |

## Claims

1. A program search device comprising:

a table storage unit that stores an allowed word table in which a plurality of morphemes and the number of appearances thereof are associated with each other;
a program stream acquiring unit that acquires a program stream generated according to a broadcasting code of ethics;

a table update unit that extracts caption data or program information, which is a first text data item related to the content of a program, from the program stream when the acquired program stream includes the caption data or the program information, divides the extracted caption data or program information into morphemes, registers the divided morphemes in the allowed word table when the divided morphemes are not in the allowed word table, and updates the number of appearances corresponding to the divided morphemes when the divided morphemes are in the allowed word table;

a program storage unit that stores a program included in the acquired program stream;

a data acquiring unit that acquires a second text data item related to the stored program and associates the acquired second text data item with acquisition date and time information;

a data processing unit that divides the second text data item into morphemes, replaces the divided morpheme with a predetermined symbol when the divided morpheme has not been registered in the allowed word table, or when the divided morpheme has been registered in the allowed word table, but the number of appearances corresponding to the morpheme is less than a predetermined first threshold value, and recombines the morphemes into a third text data item;

an index giving unit that gives a set of the recombined third text data item and the acquisition date and time information associated with the second text data item corresponding to the third text data item as index data to the stored program; and

a program extracting unit that extracts the program stored in the program storage unit or a predetermined scene in the program on the basis of an input search keyword and the index data.

2. A program search device comprising:

a table storage unit that stores an allowed word table in which a plurality of morphemes and the number of appearances thereof are associated with each other;

a program information acquiring unit that acquires program information which is a first text data item related to the content of a program and is generated according to a broadcasting code of ethics;

a table update unit that divides the program information into morphemes, registers the divided morphemes in the allowed word table when the divided morphemes are not in the allowed word table, and updates the number of appearances corresponding to the divided morphemes when the divided morphemes are in the allowed word table;

a program storage unit that stores a program included in the acquired program stream;

a data acquiring unit that acquires a second text data item related to the stored program and associates the acquired second text data item with acquisition date and time information;

a data processing unit that divides the second text data item into morphemes, replaces the divided morpheme with a predetermined symbol when the divided morpheme has not been registered in the allowed word table, or when the divided morpheme has been registered in the allowed word table, but the number of appearances corresponding to the morpheme is less than a predetermined first threshold value, and recombines the morphemes into a third text data item;

an index giving unit that gives a set of the recombined third text data item and the acquisition date and time information associated with the second text data item corresponding to the third text data item as index data to the stored program; and

a program extracting unit that extracts the program stored in the program storage unit or a predetermined scene in the program on the basis of an input search keyword and the index data.

3. The program search device according to claim 1 or 2, wherein, when caption data is added to the stored program, the index giving unit gives the caption data as the index data to the program, and when no caption data is added to the program or when it is considered that no caption data is added to the program, the index giving unit gives the recombined third text data item as the index data to the program.

4. The program search device according to claim 3, wherein, when a caption ratio, which is the number of caption data items per second, is less than a predetermined second threshold value, the index giving unit considers that no caption data is added to the program.

5. A program search method comprising:

acquiring a program stream generated according to a broadcasting code of ethics;

extracting caption data or program information, which is a first text data item related to the content of a program, from the acquired program stream when the program stream includes the caption data or the program information;

dividing the extracted caption data or program information into morphemes;

registering the divided morphemes in an allowed word table in which a plurality of morphemes and the number of appearances thereof are associated with each other when the divided morphemes are not in the allowed word table;

updating the number of appearances corresponding to the divided morphemes when the divided morphemes are in the allowed word table;

storing a program included in the acquired program stream in a program storage unit;

acquiring a second text data item related to the stored program and associating the acquired second text data item with acquisition date and time information;

dividing the second text data item into morphemes;

replacing the divided morpheme with a predetermined symbol when the divided morpheme has not been registered in the allowed word table, or when the divided morpheme has been registered in the allowed word table, but the number of appearances corresponding to the morpheme is less than a predetermined first threshold value;

recombining the second text data item into a third text data item;

giving a set of the recombined third text data item and the acquisition date and time information associated with the second text data item corresponding to the third text data item as index data to the stored program; and

extracting the program stored in the program storage unit or a predetermined scene in the program on the basis of an input search keyword and the index data.

6. A program search method comprising:

acquiring program information which is a first text data item related to the content of a program and is generated according to a broadcasting code of ethics;

dividing the program information into morphemes;

registering the divided morphemes in an allowed word table in which a plurality of morphemes and the number of appearances thereof are associated with each other when the divided morphemes are not in the allowed word table;

updating the number of appearances corresponding to the divided morphemes when the divided morphemes are in the allowed word table;

storing a program included in the acquired program stream in a program storage unit;

acquiring a second text data item related to the stored program and associating the acquired second text data item with acquisition date and time information;

dividing the second text data item into morphemes;

replacing the divided morpheme with a predetermined symbol when the divided morpheme has not been registered in the allowed word table, or when the divided morpheme has been registered in the allowed word table, but the number of appearances corresponding to the morpheme is less than a predetermined first threshold value;

recombining the second text data item into a third text data item;

giving a set of the recombined third text data item and the acquisition date and time information associated with the second text data item corresponding to the third text data item as index data to the stored program; and

extracting the program stored in the program storage unit or a predetermined scene in the program on the basis of an input search keyword and the index data.

# FIG.1

# FIG.2

# FIG.3

200

| PRECEDING MORPHEME pword | MAIN MORPHEME word | NUMBER OF APPEARANCES wnum |
|---|---|---|
| NULL | 総理 | 1 |
| 総理 | の | 1 |
| の | 命 | 1 |
| 命 | を | 1 |
| を | 受け | 1 |
| NULL | 外相 | 1 |
| 外相 | は | 1 |
| は | 基地 | 1 |
| 基地 | を | 1 |
| を | 視察 | 1 |
| 視察 | し | 1 |
| NULL | 外 | 1 |
| ⋮ | ⋮ | ⋮ |

202

# FIG.4

130

210

212

aaa: Is it Beethoven's
     "Symphony No. 5, Schicksal"?
bbb: That's right.

# FIG.5

```
                    START

          S300
        IS THERE
     PROGRAM ADDITIONAL ──── NO
        DATA?

          YES   S302
      ACQUIRE TEXT BODY

          S304
    PERFORM LEXICAL ANALYSIS

          S306
    DIVIDE TEXT BODY INTO
         MORPHEMES

          S308
      INITIALIZE PREV

          S310
          IS
     THERE REMAINING ──── NO ──── END
       MORPHEME?

          YES   S312
    SUBSTITUTE MORPHEME INTO
           WORD

          S314
           IS
  YES ──── WORD SPECIAL
        SYMBOL?

          NO    S316
     ARE THERE
     PREV AND WORD IN ──── NO
       TABLE?

    YES   S318                         S320
      wnum+1                       ADD RECORD

          S322
      WORD → PREV
```

# FIG.6

(a)

```
＞＞総理の命を受け、(LINE FEED)
(BLANK) (BLANK) 外相は基地を視察し、(LINE FEED)
(BLANK) (BLANK) 外には大勢の報道陣が詰め掛けました。(LINE FEED)
```

⇩

(b)

```
■／総理／の／命／を／受け／
■／外相／は／基地／を／視察／し／
■／外／には／大勢／の／報道陣／が／詰め／掛け／ました／
■
```

# FIG.7

START

ACQUIRE TIME DATA ～S350

SET TIME RANGE ～S352

ACQUIRE POST DATA GROUP ～S354

INITIALIZE OUTPUT BUFFER ～S356

S358
IS THERE REMAINING POST DATA? —— NO

YES ⌐S362

EXTRACT POST DATA

⌐S360
DISPLAY POST DATA

END

PERFORM LEXICAL ANALYSIS ～S364

DIVIDE TEXT BODY INTO MORPHEMES ～S366

INITIALIZE PREV ～S368

S370
NO —— IS THERE REMAINING MORPHEME?

YES ⌐S372

SUBSTITUTE MORPHEME INTO WORD

S374
YES —— IS WORD PUNCTUATION MARK OR THE LIKE?

NO

S376
ARE THERE PREV AND WORD IN TABLE? —— NO

YES ⌐S380

WORD → PREV

⌐S378
REPLACE WORD WITH TURNED LETTER

S382
IS THERE RECORD IN WHICH POSTTIME IS IDENTICAL TO TIME? —— NO

YES ⌐S384

ADD WORD TO RECORD

⌐S386
ADD RECORD

24

# FIG.8

| |
|---|
| POST TIME: 17:45:31 SEPTEMBER 30, 2009<br>WRITER: A<br><br>TEXT BODY: 総理はBCDだな |

| |
|---|
| POST TIME: 17:45:38 SEPTEMBER 30, 2009<br>WRITER: B<br><br>TEXT BODY: 外相は？ |

# FIG.9

(a)

| post | wlist |
|---|---|
| 17:45:31<br>SEPTEMBER 30, 2009 | 総理はBCDだな |

⇩

(b)

| post | wlist |
|---|---|
| 17:45:31<br>SEPTEMBER 30, 2009 | 総理／は／BC／◎／だな |

# FIG.10

# FIG.11

112

122

114

124

140

150

468

420

PROGRAM SEARCH DEVICE

PROGRAM STREAM
ACQUIRING UNIT

152

TUNER
UNIT

156

DEMUX
UNIT

154

COMMU-
NICATION
UNIT

PROGRAM
STORAGE
UNIT ~464

AV
DECODING
UNIT ~158

130

462

CENTRAL CONTROL UNIT

TABLE UPDATE UNIT ~180

DATA ACQUIRING UNIT ~482

DATA PROCESSING UNIT ~184

DISPLAY CONTROL UNIT ~186

PROGRAM STORAGE
CONTROL UNIT ~488

PROGRAM INFORMATION
STORAGE CONTROL UNIT ~490

INDEX GIVING UNIT ~492

PROGRAM EXTRACTING UNIT ~494

OPER-
ATION
UNIT

RTC UNIT

160

TABLE
STORAGE
UNIT

466

PROGRAM
INFORMATION
STORAGE UNIT

470

INDEX
STORAGE
UNIT

# FIG.12

START

ACQUIRE CURRENT TIME ── S500

ACQUIRE PROGRAM INFORMATION STRING ── S502

S504
IS THERE REMAINING PROGRAM INFORMATION? ── NO → END

YES

EXTRACT PROGRAM INFORMATION ── S506

ACQUIRE CAPTION DATA STRING ── S508

SUBSTITUTE TOTAL NUMBER INTO CAPNUM ── S510

S512
IS THERE REMAINING CAPTION DATA? ── YES

NO

EXTRACT CAPTION DATA ── S514

PERFORM LEXICAL ANALYSIS ── S516

DIVIDE DATA INTO MORPHEMES ── S518

S520
IS THERE REMAINING MORPHEME? ── YES

NO

SUBSTITUTE MORPHEME INTO WORD ── S522

ADD RECORD ── S524

CALCULATE CST ── S526

S528
CST ≥ $\beta$ ? ── NO

YES ── S530
1 → capflg

S532
ACQUIRE POST DATA

S534
IS THERE REMAINING RECORD? ── YES

NO ── S536
2 → capflg

EXTRACT RECORD ── S538

S540
IS THERE REMAINING MORPHEME? ── NO

YES ── S542
EXTRACT MORPHEME

ADD RECORD ── S544

# FIG.13

550

552 | 9:23:45 SEPTEMBER 30, 2009

554 ＞＞総理の命を受け、
外相は基地を視察し、
外には大勢の報道陣が詰め掛けました。

# FIG.14

START

IS THERE SEARCH INPUT? — S570

NO

YES

SUBSTITUTE KEYWORD INTO WORD — S572

SEARCH INDEX TABLE — S574

SEARCH PROGRAM INFORMATION TABLE — S576

DISPLAY SEARCH LIST — S578

IS THERE SELECTION INPUT? — S580

NO

YES

SEARCH PROGRAM STORAGE UNIT — S582

DISPLAY PROGRAM — S584

END

# FIG.15

# FIG.16

<table>
<tr><td colspan="2">**INTERNATIONAL SEARCH REPORT**</td><td colspan="2">International application No.<br>PCT/JP2011/071091</td></tr>
</table>

**A. CLASSIFICATION OF SUBJECT MATTER**
*G06F17/30*(2006.01)i, *H04N5/76*(2006.01)i, *H04N7/173*(2011.01)i

According to International Patent Classification (IPC) or to both national classification and IPC

**B. FIELDS SEARCHED**

Minimum documentation searched (classification system followed by classification symbols)
G06F17/30, H04N5/76, H04N7/173

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2008-204425 A (Yahoo Japan Corp.),<br>04 September 2008 (04.09.2008),<br>entire text; all drawings<br>(Family: none) | 1-6 |
| A | JP 2010-67005 A (Yahoo Japan Corp.),<br>25 March 2010 (25.03.2010),<br>entire text; all drawings<br>(Family: none) | 1-6 |
| A | JP 2006-190019 A (Hitachi, Ltd.),<br>20 July 2006 (20.07.2006),<br>entire text; all drawings<br>(Family: none) | 1-6 |

[X] Further documents are listed in the continuation of Box C.    [ ] See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 November, 2011 (24.11.11) | Date of mailing of the international search report<br>06 December, 2011 (06.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/071091 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2006/019101 A1  (NEC Corp.),<br>23 February 2006 (23.02.2006),<br>entire text; all drawings<br>(Family: none) | 1-6 |

Form PCT/ISA/210 (continuation of second sheet) (July 2009)

**REFERENCES CITED IN THE DESCRIPTION**

**Patent documents cited in the description**

- JP 3538955 B